# EUROPEAN PATENT APPLICATION

(11) **EP 4 135 181 A1**
(43) Date of publication of application: **15.02.2023**
(21) Application number: 22157605.1
(22) Date of filing: 13.03.2017
(51) Int. Cl.: H02M 3/07, H02J 7/02, H02J 7/04, H02M 3/335, H02J 7/00, H02J 3/18, H02M 1/00

(54) **BATTERY MANAGEMENT SYSTEM WITH ADIABATIC SWITCHED-CAPACITOR CIRCUIT**

(30) Priority: 11.03.2016 US 201662306749 P
(62) Divisional of application: 17764285.7
(71) Applicant: PSEMI Corporation, San Diego, CA 92121 (US)
(72) Inventor: GIULIANO, David, Bedford, 03110 (US); KUNST, David, Cupertino, 95014 (US)
(74) Representative: Taruttis, Tilman

(57) **Abstract**

An apparatus for switching between powering a load from a battery and powering the load from another power source includes a battery manager and a switched-capacitor network.

## Description

### RELATED APPLICATIONS

This application claims the benefit of the March 11, 2016 priority date of U.S. Provisional Application 62/306,749, the contents of which are herein incorporated by reference.

### FIELD OF INVENTION

This invention relates to power conversion, and in particular, to battery-managers that use switched-capacitors.

### BACKGROUND

Many portable electrical devices are used while the device is plugged into an AC source. During this time, a battery manager must provide power to both charge the battery, if necessary, and to operate the device itself. When the AC source is disconnected, the battery manager must switch over so that the battery provides power to the device.

### SUMMARY

In one aspect, the invention features an apparatus for switching between powering a load from a battery and powering the load from an AC source. Such an apparatus includes a battery manager with an AC/DC converter connected to its input. Either the AC/DC converter or the battery manager includes an adiabatic switched-capacitor network. Such a network is characterized by having a capacitor with charge stored thereon circuitry for constraining a rate of change of the charge at least in part as a result of causing charge to pass through an inductance.

In another aspect, the invention features an apparatus for switching between powering a load using energy stored in a battery and powering the load using energy from an AC source, the apparatus comprising a battery manager, a switched-capacitor network, a battery charger for charging the battery while the load is being powered using energy from the AC source, and a first controller, wherein the battery manager comprises an input terminal for coupling to a bridge rectifier, wherein the switched-capacitor network comprises a plurality of capacitors and first and second switch sets, wherein closing switches in the first switch set and opening switches in the second switch set arranges the capacitors into a first state, wherein closing the switches in the second set and opening the switches in the first set arranges the capacitors in a second state, and wherein, in operation, the controller causes the switched-capacitor network to transition between the first state and the second state at a specific frequency, thereby transferring charge between capacitors and terminals of the switched-capacitor network.

In some embodiments, the switched-capacitor network is in the AC/DC converter. Among these are embodiments in which the switched-capacitor network includes a controller, a charge pump, and a switching regulator connected to the charge pump and to a bridge rectifier. In these embodiments, the controller controls the switching regulator and the charge pump.

In other embodiments, the AC/DC converter is part of the battery manager. There are a variety of locations in which one can place the switched-capacitor network within a battery manager.

In one of these embodiments, the battery manager comprises an input connected to the AC/DC converter, and a step-down converter. In these embodiments, the switched-capacitor network is between the step-down converter and the input.

In another of these embodiments, the battery manager comprises, in addition to a step-down converter, an input connected to the AC/DC converter, an output connected to a load, a first line that connects the input to the output, a second line that connects the step-down converter to the first line at a first node, a third line that connects the switch to the first line at a second node, and a switch that selectively connects and disconnects the battery from the first line. In these embodiments, the switched-capacitor network is on the first line between the first and second nodes.

In another of these embodiments, the battery manager includes, in addition to a step-down converter and a battery charger, a first line extending between the step-down converter and an output to which a load to be driven is to be connected, and a second line that connects the battery charger to the first line at a first node. In these embodiments, the switched-capacitor network is disposed between the first node and the step-down converter.

In another of these embodiments, the battery manager includes, in addition to a step-down converter, a first line that extends from battery manager's input to its output, and a second line that connects the step-down converter to the first line at a node. In these embodiments, switched-capacitor network is disposed between the battery manager's input and the node.

In another of these embodiments, the battery step-down converter has an inductance upon the switched-capacitor network relies to limit a rate of change of charge present on a capacitor within the switched-capacitor network.

Further embodiments include those in which the switched-capacitor network comprises a charge pump, a switching regulator connected to the charge pump, and a controller that controls the switching regulator and the charge pump so as to achieve operation thereof.

In any of the foregoing embodiments, it is possible for the switched-capacitor network to include a charge pump and an inductance coupled to the charge pump. Among these are embodiments in which the charge pump comprises a cascade multiplier.

In another aspect, the invention features an apparatus for switching between powering a load from a battery and powering it load from a DC source. Such an apparatus includes a battery manager having an switched capacitor network that includes a capacitor having an amount of charge stored thereon, and circuitry for constrains a rate at which the amount of charge is changed at least in part as a result of causing charge to pass through an inductance.

Among these embodiments are those in which the battery manager includes an input, and a step-down converter with the switched-capacitor network between them.

Also among these embodiments are those in which the battery manager includes an input, an output, a first line, a second line, a third line, a step-down converter, and a switch. In these embodiments, the output is configured to be connected to a load that is to be driven, the input is connected to a DC source, the switch selectively connects and disconnects the battery from the first line, the first line connects the input to the output, the second line connects the step-down converter to the first line at a first node, wherein the third line connects the switch to the first line at a second node, and the switched-capacitor network is on the first line between the first and second nodes.

In yet other embodiments, the battery manager includes a first line, a second line, an output to which a load to be driven is to be connected, a battery charger, and a step-down converter. In these embodiments, the first line extends between the step-down converter and the output, the second line connects the battery charger to the first line at a first node, and the switched-capacitor network is disposed between the first node and the step-down converter.

In some embodiments, the battery manager comprises the battery charger and a step-down converter. Among these are embodiments in which the step-down converter is disposed such that, in operation, energy for charging the battery and energy for powering the load both pass through the step-down converter, and other embodiments in which it is instead disposed such that, in operation, energy for charging the battery passes through the step-down converter and energy for powering the load bypasses the step-down converter.

Also among the embodiments are those that include a bypass switch control circuit to control slew rate of voltage transitions in the switched-capacitor circuit.

In still other embodiments, the battery manager includes an input, an output, a step-down converter, a first line, and a second line. In such embodiments, the first line extends from the input to the output, the second line connects the step-down converter to the first line at a node, and the switched-capacitor network is disposed between the input and the node.

Still other embodiments are those in which the battery manager includes a step-down converter. In these embodiments, the step-down converter includes an inductance, and the switched-capacitor network relies on the inductance of the step-down converter to limit a rate of change of charge present on a capacitor within the switched-capacitor network.

Yet other embodiments include a travel charger, with the battery manager being a constituent thereof.

Among any of the foregoing embodiments are those in which the switched-capacitor network includes a charge pump and an inductance coupled to the charge pump. These include embodiments in which the charge pump includes a cascade multiplier. Also among the foregoing embodiments are those in which the switched-capacitor network is adiabatic and those in which it is diabatic.

These and other features of the invention will be apparent from the following detailed description and the accompanying figures, in which:

### BRIEF DESCRIPTION OF THE FIGURES

FIG. 1 shows a two-stage power conversion circuit;
FIG. 2 shows the circuit of FIG. 1 with additional circuitry for receiving an AC voltage;
FIG. 3 shows a first embodiment of a switched-capacitor architecture for use in the power- conversion circuits of FIGS. 1 and 2;
FIG. 4 shows a switching circuit contained in the stages of the power conversion circuit of FIG. 3;
FIG. 5 is a parts list for the embodiment shown in FIG. 3;
FIG. 6 is a variant of the switched-capacitor architecture of FIG. 3 with circuitry for controlling slew rate;
FIG. 7 shows operation of switches shown in FIG. 5 for controlling slew rate;
FIG. 8 shows details of a slew-rate control circuit from the switched-capacitor architecture shown in FIG. 6;
FIG. 9 shows slew control carried out by the slew-rate control circuitry shown in FIG. 6;
FIGS. 10 shows several locations for incorporation of an adiabatic switched-capacitor circuit into a first embodiment of a battery manager;
FIG. 11 shows several locations for incorporation of an adiabatic switched-capacitor circuit into a second embodiment of a battery manager;
FIG. 12-15 show battery managers with an adiabatic switched-capacitor circuit at four of the locations shown in FIGS. 10-11;
FIG. 16 is a functional block diagram of a typical adiabatic switched-capacitor circuit;
FIG. 17 shows exemplary components for implementing an adiabatic switched-capacitor circuit;
FIGS. 18-20 show an implementation of the step-down converter of FIGS. 10-11 that includes an adiabatically charged switched-capacitor network;
FIG. 21 is a cascade multiplier for use as a switched- capacitor network in the embodiments of FIGS. 18-20; and
FIG. 22 shows the circuit of FIG. 2 incorporated into a travel adapter.

### DETAILED DESCRIPTION

Before describing several exemplary embodiments of power converter circuits and processing performed by and on such power converter circuits, it should be appreciated that, in effort to promote clarity in explaining the concepts, reference is sometimes made herein to specific switched-capacitor circuits or specific switched-capacitor circuit topologies. It should be understood that such references are merely exemplary and should not be construed as limiting.

As used herein, ac-dc converters are the same as AC/DC converters; and switched-capacitor circuits are the same as switched-capacitor networks and charge pumps.

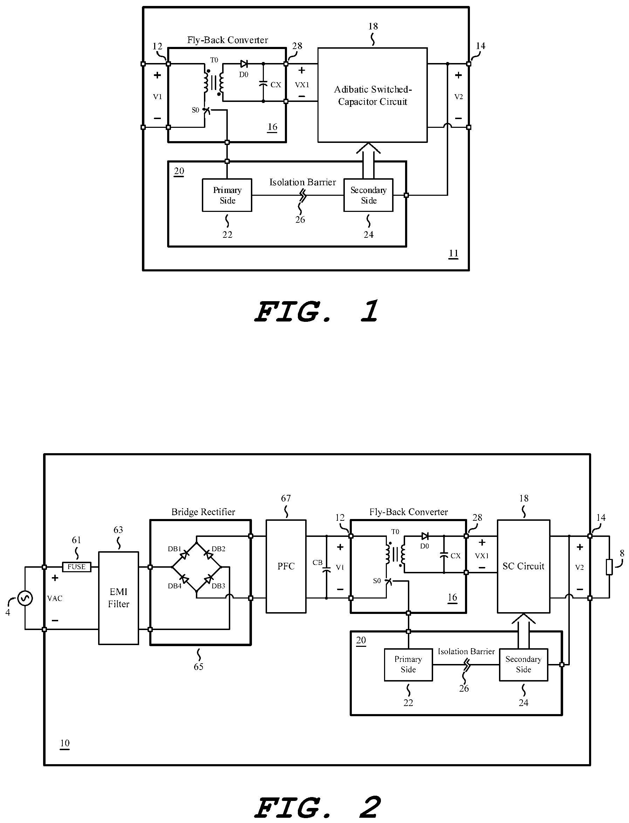

FIG.1 shows a two-stage power conversion circuit **11** having a first terminal **12** that connects to a first stage and a second terminal **14** that connects to a second stage. The first terminal **12** is at a first voltage *V1* and the second terminal **14** is at a second voltage *V2.*

In the illustrated embodiment, the first stage is implemented as a switch-mode pre-regulator **16** and the second stage is implemented as an adiabatic switched-capacitor circuit **18.** However, in alternative embodiments, this second stage is non-adiabatic, or diabatic.

The pre-regulator **16** can be implemented in a variety of ways, so long as the essential function thereof, namely regulation of an output voltage, can be carried out. In the illustrated embodiment, the pre-regulator **16** includes a pre-regulator switch **S0,** a transformer **T0,** a diode **D0,** and a filter capacitor **CX.** A particularly useful implementation of a pre-regulator **16** is a magnetically-isolated converter, an example of which is a fly-back converter.

A variety of fly-back converters can be used to implement the pre-regulator **16.** These include a quasi-resonant fly-back converter, an active-clamp fly-back converter, an interleaved fly-back converter, and a two-switch fly-back converter.

Other examples of magnetically-isolated converters are forward converters. Examples of suitable forward converters include a multi-resonant forward converter, an active-clamp forward converter, an interleaved forward converter, and a two-switch forward converter.

Yet other examples of magnetically-isolated converters are half-bridge converters and full-bridge converters. Examples of half-bridge converters include an asymmetric half-bridge converter, a multi-resonant half-bridge converter, and an LLC resonant half-bridge converter. Examples of full-bridge converters include an asymmetric full-bridge converter, a multi-resonant full-bridge converter, and an LLC resonant full-bridge converter.

It is also possible to implement the pre-regulator **16** using a non-isolated converter. Examples include a buck converter, a boost converter, and a buck-boost converter.

As used herein, two functional components are said to be "isolated," or more specifically, "galvanically isolated," if energy can be communicated between those components without a direct electrical conduction path between those components. Such isolation thus presupposes the use of another intermediary for communicating energy between the two components without having actual electrical current flowing between them. In some cases, this energy may include information.

Examples include the use of a wave, such as an electromagnetic, mechanical, or acoustic wave. As used herein, electromagnetic waves include waves that are in span the visible range, the ultraviolet range, and the infrared range. Such isolation can also be mediated through the use of quasi-static electric or magnetic fields, capacitively, inductively, or mechanically.

Most functional components have circuitry in which different parts of the circuit are at different electrical potentials. However, there is always a potential that represents the lowest potential in that circuit. This is often referred to as "ground" for that circuit.

When a first and second functional component are connected together, there is no guarantee that the electrical potential that defines ground for the first component will be the same as the electrical potential that defines ground for the second circuit. If this is the case, and if these components are connected together, it will be quite possible for electrical current to flow from the higher of the two grounds to the lower of the two grounds. This condition, which is called a "ground loop," is undesirable. It is particularly undesirable if one of the two components happens to be a human being. In such cases, the current in the ground loop may cause injury.

Such ground loops can be discouraged by galvanically isolating the two components. Such isolation essentially forecloses the occurrence of ground loops and reduces the likelihood that current will reach ground through some unintended path, such as a person's body.

The switched-capacitor circuit **18** can be implemented as a switched-capacitor network. Examples of such networks include ladder networks, Dickson networks, Series-Parallel networks, Fibonacci networks, and Doubler networks. These can all be adiabatically charged and configured into multi-phase networks. A particularly useful switched-capacitor network is an adiabatically charged version of a full-wave cascade multiplier. However, diabatically charged versions can also be used.

As used herein, changing the charge on a capacitor "adiabatically" means causing an amount of charge stored in that capacitor to change by passing the charge through a non-capacitive element. A positive adiabatic change in charge on the capacitor is considered adiabatic charging while a negative adiabatic change in charge on the capacitor is considered adiabatic discharging. Examples of non-capacitive elements include inductors, magnetic elements, resistors, and combinations thereof. In either case, the result is a constraint on the rate at which the quantity of charge on the capacitor can change.

In some cases, a capacitor can be charged adiabatically for part of the time and diabatically for the rest of the time. Such capacitors are considered to be adiabatically charged. Similarly, in some cases, a capacitor can be discharged adiabatically for part of the time and diabatically for the rest of the time. Such capacitors are considered to be adiabatically discharged.

Diabatic charging includes all charging that is not adiabatic and diabatic discharging includes all discharging that is not adiabatic.

As used herein, an "adiabatic switched-capacitor circuit" is a network having at least one capacitor that is both adiabatically charged and adiabatically discharged. A "diabatic switched-capacitor circuit" is a network that is not an adiabatic switched-capacitor circuit.

Examples of pre-regulators **16,** switched-capacitor circuits **18,** their accompanying circuitry, and packaging techniques can be found U.S. Patent Nos. 9,362,826, 9,497,854, 8,723,491, 8,503,203, 8,693,224, 9,502,968, 8,619,445, 9,203,299, and 9,041,459, U.S. Patent Publications 2016/0197552, 2015/0102798, 2014/0301057, 2013/0154600, 2015/0311786, 2014/0327479, 2016/0028302, 2014/0266132, 2015/0077175, and 2015/0077176, and PCT publications WO2014//062279, WO2015//138378, WO2015//138547, WO2016//149063, and WO 2017/007991, the contents of which are herein incorporated by reference.

Adiabatic switched-capacitor circuits are described in detail in U.S. Patent No. 8,860,396, issued 10/14/2014, in U.S. Provisional Applications 62/132,701 and 62/132,934, both of which were filed on March 13, 2015. The contents of the foregoing documents are incorporated herein by reference.

A first controller **20** controls the operation of the first and second stages. The first controller **20** includes a primary side **22** that controls the first stage and a secondary side **24** that controls the second stage. An isolation barrier **26** separates the primary side **22** from the secondary side **24.**

The primary side **22** of the first controller **20** controls the pre-regulator switch **S0.** Opening and closing the pre-regulator switch **S0** controls the current provided to a primary side of the transformer **T0.** This, in turn, controls the voltage across the filter capacitor **CX.** When the pre-regulator switch **S0** is on, the diode **D0** is off and when the pre-regulator switch **S0** is off, the diode **D0** is on.

The pre-regulator **16** also includes a regulator-output terminal **28** maintained at an intermediate voltage *VX1* that is lower than the first voltage *V1*. This regulator-output terminal **28** connects to the adiabatic switched-capacitor circuit **18.** The adiabatic switched-capacitor circuit **18** thus receives this intermediate voltage *VX1* and transforms it into the second voltage *V2*.

The adiabatic switched-capacitor circuit **18** operates in discrete steps. Thus, it only provides coarse regulation of its output. It cannot provide fine regulation of its output. It is for the pre-regulator **16** to carry out this fine regulation. The two-stage design shown in FIG. 1 reduces the need for the pre-regulator **16** to sustain a high-current burden. This means that the secondary winding of the transformer **T0** can instead carry a much smaller RMS current. This, in turn, lowers winding loss and reduces the voltage ripple at the regulator-output terminal **28.** It also means that the filter capacitor **CX** that couples the pre-regulator **16** to the adiabatic switched-capacitor circuit **18** can be made smaller.

However, the improved performance of the pre-regulator **16** cannot be completely offset by the increased size and power loss of having the adiabatic switched-capacitor circuit **18** in the second stage. Therefore, it is imperative that the adiabatic switched-capacitor circuit **18** be both extremely efficient and small.

The two-stage power conversion circuit **11** in FIG. 1 is shown as being configured to receive a DC voltage. In an alternative embodiment shown in FIG. 2, a bridge rectifier **65** coupled to the first terminal **12** by a coupling capacitor **CB** provides a way to receive an AC voltage *VAC.*

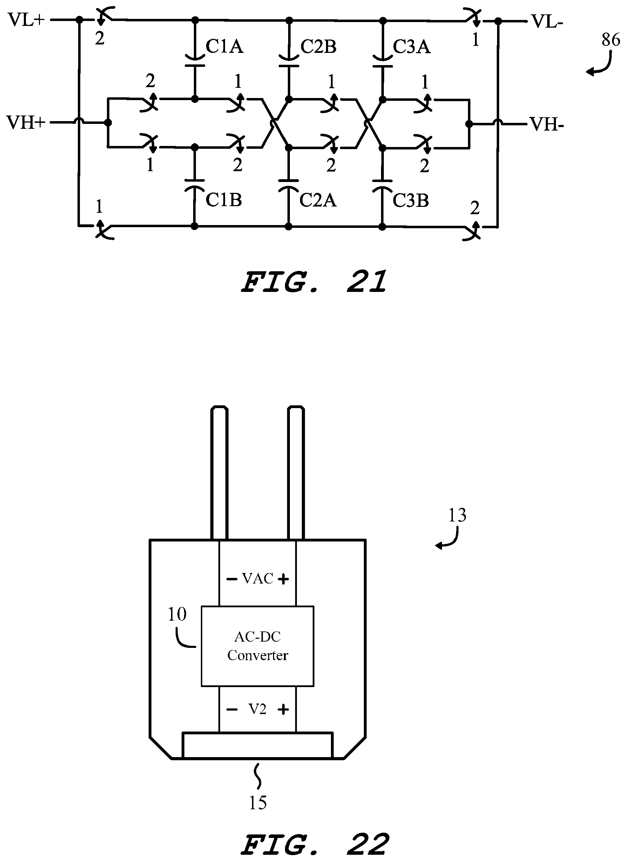

The power conversion circuit **10** of FIG. 2 is similar to that shown in FIG. 1, but with additional circuitry for receiving an AC voltage *VAC* provided by an AC source **4** and converting that AC voltage *VAC* into the second voltage V2. The AC voltage *VAC* is provided to input terminals of a bridge rectifier 65 having bridge diodes **DB1, DB2, DB3,** and **DB4** arranged to form a bridge and having an output across a bridge capacitor **CB.** The output across the bridge capacitor **CB** becomes the first voltage *V1* presented at the first terminal **12.** A power-conversion circuit **10** of this type may be incorporated into a travel adapter **13,** as shown in FIG. 22. Such a travel adapter **13** outputs a DC voltage at a USB port **15.**

Some embodiment include circuitry for controlling harmonic current and thus boosting the ratio of real power to apparent power that flows through the power supply. This is particularly useful for power supplies that attach to a wall outlet that supplies an AC voltage. An example of such circuitry is an active power-factor corrector **67** disposed between the bridge rectifier **65** and the pre-regulator **16.**

FIG. 2 also shows a fuse **61** between the AC power source **4** and the remaining components of the power-conversion circuit **10** for safety. An electromagnetic interference filter **63** is also provided to suppress the uncontrolled emission of electromagnetic waves that may arise during operation of the power-conversion circuit **10.**

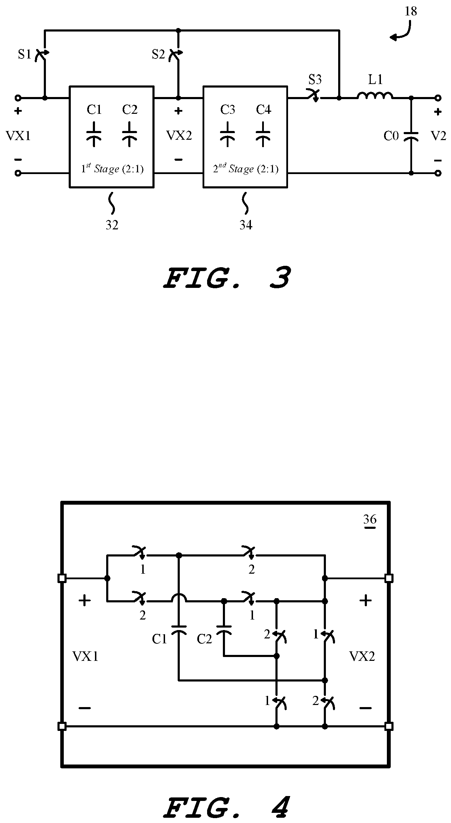

FIG. 3 shows a first embodiment of a switched-capacitor circuit **18** that is designed to accept a nominal voltage of 20 volts and to produce a variety of output voltages, such as 5 volts and 10 volts. This is particularly useful for Type-C travel adapters. This is because, unlike the older USB standards, in which the output is always five volts, the newer USB Type C standard permits higher output voltages, such as ten, fifteen, and even twenty volts.

FIG. 3 shows a first embodiment of an adiabatic switched-capacitor circuit 18 that is designed to accept a nominal voltage of 20 volts. The illustrated adiabatic switched-capacitor circuit **18** features a first switched-capacitor stage **32,** a second switched-capacitor stage **34,** a first bypass switch **S1,** a second bypass switch **S2,** and a third bypass switch **S3.** An LC filter having an output inductor **L1** and an output capacitor **C0** permit adiabatic operation. By selectively opening and closing the bypass switches **S1, S2, S3,** it is possible to selectively bypass selected ones of the first and second switched-capacitor stages **32, 34.**

Each of the first and second stages **32, 34** is a 2X voltage divider having a maximum voltage conversion from *VX1* to *VX2* of 4:1. The resulting adiabatic switched-capacitor circuit **18** is designed to accept an intermediate voltage *VX1* of 20 volts and to provide a voltage of either 20 volts, 10 volts, or 5 volts. Some embodiments deliver a 15-volt output voltage, which is sometimes required by the Type-C standard. This can be provided by having the pre-regulator **16** deliver 15 volts to the switched-capacitor circuit **18** instead of 20 volts and running the switched-capacitor circuit **18** in the 1:1 mode.

The adiabatic switched-capacitor circuit **18** shown in FIG. 3 has three modes of operation, a 1:1 mode, a 2:1 mode, and a 4:1 mode. In the 1:1 mode, the first bypass switch **S1** closes, and the second and third bypass switches **S2** and **S3** open. In the 2:1 mode, the second bypass switch **S2** closes and the first and third bypass switches **S1** and **S3** open. In the 4:1 mode, the third bypass switch **S3** closes and the first and second bypass switches **S1** and **S2** open. All bypassed stages run in a low-power mode to save power since they are not needed to provide voltage conversion (i.e., they are not switching at a specific frequency).

FIG. 4 illustrates a switched-capacitor circuit **36** inside the first stage **32.** A similar circuit is within the second stage **34.** During operation, this circuit transitions between first and second states. In the first state, all switches labeled **"1"** close and all switches labeled **"2"** open. In the second state, all switches labeled **"1"** open and all switches labeled **"2"** close. The switched-capacitor circuit **36** alternates between the first and second state at a specific frequency. This frequency is one that is selected to produce a second intermediate voltage *VX2* that is half of the intermediate voltage *VX1.*

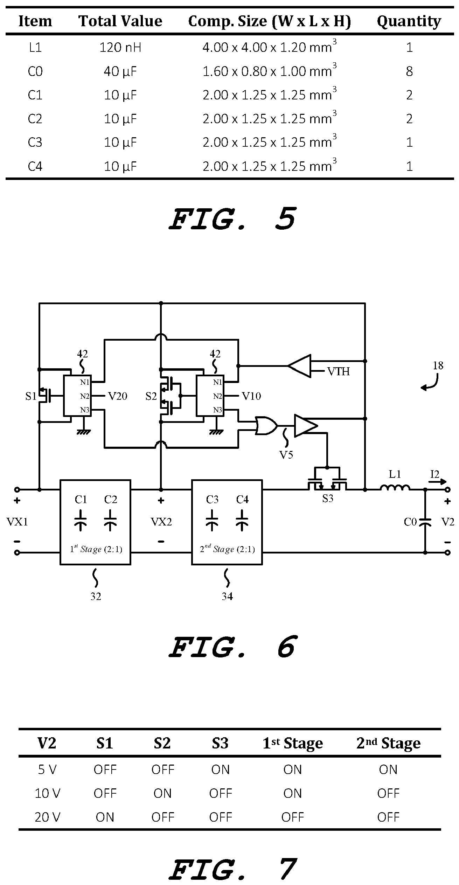

FIG. 5 shows a component list for one implementation of the adiabatic switched-capacitor circuit **18** shown in FIG. 3. The components were selected so the solution provides a high efficiency, a small solution size, and a maximum output voltage ripple of 100 mV peak-to-peak. The total value column specifies the total amount of inductance and/or capacitance required of the components at their operating condition.

In an alternative embodiment, the first and second bypass switches **S1, S2** can be turned on and off in such a way that the second voltage V2 slews up and down in a controlled manner. This is particularly useful when there is a maximum slew rate to be met. For example, in the case of a Type-C USB power adapter, where the second voltage *V2* is programmable from 5 volts to 20 volts, there is a maximum slew-rate requirement of 30 mV/µs for voltage transitions.

FIG. 6 shows an alternative embodiment of the adiabatic switched-capacitor circuit **18** of FIG. 3 in which first and second bypass switch control circuits **42** are added to control the slew rate of voltage transitions in the adiabatic switched-capacitor circuit **18** shown in FIG. 3. These bypass switch control circuits **42** control the slew rate of voltage transitions in the adiabatic switched-capacitor circuit **18** shown in FIG. 3 when the output transitions from 5 volts to 10 volts and from 5 volts to 20 volts. The bypass switch control circuit **42** also controls the second voltage V2 slew-rate from 10 volts to 5 volts and 20 volts to 5 volts.

FIG. 7 shows a table of bypass switch states for three different voltage outputs.

Referring to FIG. 6, to output 20 volts, one asserts a first control input *V20.* To output only 10 volts, one asserts a second control input *V10.* By default, when neither the first nor the second output is asserted, the adiabatic switched-capacitor circuit **18** outputs 5 volts.

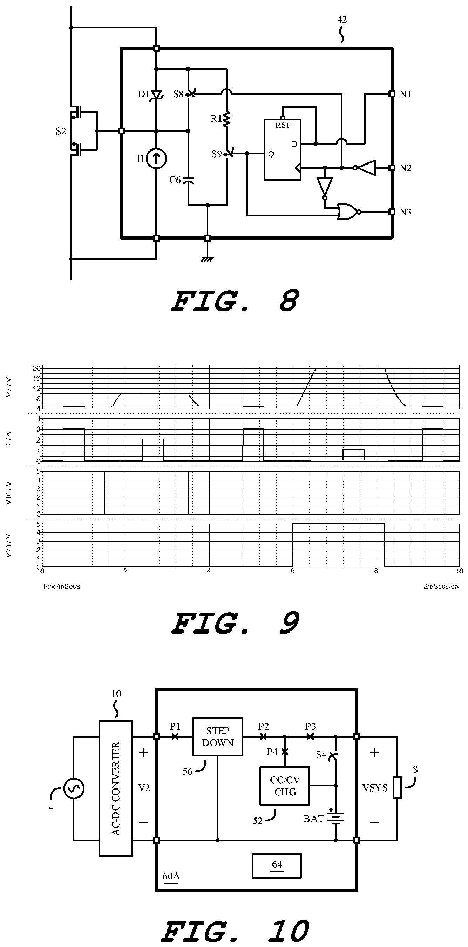

FIG. 8 shows details of a bypass switch control circuit **42** shown in FIG. 6. Although the second bypass switch **S2** is shown in FIG. 8, the first bypass switch **S1** is controlled in a similar way. All of the bypass switches **S1, S2,** and **S3** are N-channel FETs (NFETs). The composite back-to-back NFET configuration for the second and third bypass switches **S2, S3** is necessary to block the flow of reverse current from the output to the input when these switches are off while the first bypass switch **S1** is on. Although the second and third bypass switches **S2, S3** are depicted as discrete back-to-back NFETs in FIG. 8, these devices may be replaced by a single transistor with an adaptive body switch in a fully integrated solution.

A first slew-control switch **S8** in FIG. 8 turns off the first and second bypass switches **S1, S2** by shorting their gate and source terminals. When either the first bypass switch **S1** or the second bypass switch **S2** is turned on, the first slew-control switch **S8** (in the respective control) circuit opens, and the second voltage V2 transitions from 5 volts to 10 volts or from 5 volts to 20 volts. Meanwhile, an anti-slewing capacitor **C6** and a constant current source **I1** control the upward slew rate of the second voltage V2 transition from 5 volts to 10 volts or 20 volts.

When the first and second bypass switches **S1, S2** are turned off and the second voltage V2 transitions from 10 volts to 5 volts or 20 volts to 5 volts, a second slew-control switch **S9** turns on and allows a bleeder resistor **R1** to discharge the anti-slewing capacitor **C6.** This controls the downward slew rate of the second voltage V2.

A comparator in FIG. 6 detects when the second voltage V2 has dropped below a certain threshold *VTH* (e.g., *VTH*=5.25 V) and terminates the discharge of the anti-slewing capacitor **C6** by opening the second slew-control switch **S9.** Note that the bleeder resistor **R1** may be replaced by a current source, and the slew rates of both positive and negative voltage transitions may be programmed by making the current source **I1,** the bleeder resistor **R1,** and the anti-slewing capacitor **C6** be programmable or reconfigurable.

When 20 volts is desired at the output, the second and third bypass switches **S2, S3** are off while the first bypass switch **S1** is on. The first and second (2:1) switched-capacitor stages are also off. The first bypass switch **S1** is an N-channel FET (NFET) whose turn-on is controlled by the current source **I1,** which is a constant current source, and the anti-slewing capacitor **C6** such that the second voltage V2 slews up at a fixed rate.

During the 5-volt to 20-volt transition, the first and second slew-control switches **S8, S9** are open and the first bypass switch **S1** acts as a source-follower. In this configuration, the voltage on the source of the first bypass switch **S1** follows the voltage on its gate, which is given by the current though the current source **I1** divided by the capacitance of the anti-slewing capacitor **C6.** Initially, when the first bypass switch **S1** turns on and the second voltage V2 slews up, the first bypass switch **S1** operates in the saturation region (i.e., *V_{DS} > V_{GS}* - *V_{T},* where *V_{T}* is the NFET's threshold voltage). As the output approaches its final level, the first bypass switch **S1** transitions into the linear region and acts as a low-impedance switch. A Zener diode **D1** clamps the gate-to-source voltage (*V_{GS1}*) of the bypass switch **S1** to a safe level (e.g., *V_{GS1}* equals 5 volts) during steady-state operation. The transition from 20 volts back to 5 volts is controlled by the bleeder resistor **R1,** which discharges the output capacitance in a slew-rate controlled manner.

When 10 volts is desired at the output, the first and third bypass switches **S1, S3** are off while the second bypass switch **S2** is on. The first (2:1) switched-capacitor stage is on and the second switched-capacitor stage is off. The second bypass switch **S2** includes back-to-back NFETs, that operate as a source follower when the second voltage V2 transitions from 5 volts to 10 volts. As described previously, the current source **I1** and anti-slewing capacitor **C6** control the slew rate of the second voltage V2 as it transitions from 5 volts to 10 volts, the bleeder resistor **R1** controls the transition from 10 volts back to 5 volts, and the Zener diode **D1** clamps the gate-to-source voltage of the second bypass switch **S2** to a safe level during steady-state operation at 10 volts (i.e. *V2).*

Although not explicitly shown in FIGS. 6 and 8, it should be understood by those skilled in the art that additional circuitry is useful to protect the system against various single-point failures and fault conditions such as over-current, over-temperature, and over-voltage on any and all nodes, switches, and passive components.

FIG. 9 shows typical voltage transitions for the switched-capacitor circuit with slew-rate limited bypass switch control in a Type-C USB power adapter. The second voltage V2 slews up and down at approximately 20 mV/µs. According to the USB PD specification, the load must be in a low-power standby state during voltage transitions. For the simulation results shown in FIG. 9, the load was turned on after the output settled to its final level.

FIG. 10 illustrates a first battery manager **60A** that provides energy to power to a load **8** while also providing energy for charging a battery **BAT** using power delivered from an ac-dc converter **10** connected to an AC source **4.** The first battery manager **60A** supplies a system voltage *VSYS* for powering the load **8.** It does so even when the ac-dc converter **10** is disconnected from the battery manager **60A.**

The AC source **4** need not be a wall-source. Instead, the AC source **4** can be part of a wireless charging system for charging the device. Such a wireless charging system typically includes a base station and a device to be charged. The base station receives AC at a first frequency and provides it to a frequency-converter that steps it up to a higher frequency and provides it to a first coil. The device to be charged includes a second coil selected such that, when brought in proximity with the first coil, the two form an air-core transformer. This permits energy provided by the first coil to be made available at the second coil so that it can be used to charge the battery on the device to be charged.

The conversion to a higher frequency is useful for ensuring that the first coil can be made a reasonable size. Typical output frequencies are in the range of 50 kHz. Various standards exist for the extent of the frequency transition and the amount of voltage and/or current provided by the base station. An example of such a standard is the QI standard.

The first battery manager **60A** includes a step-down converter **56** that transforms a second voltage V2 provided by the ac-dc converter **10** into the system voltage *VSYS.* It also includes a constant-current/constant voltage (CCCV) charger **52** that provides power for charging the battery **BAT.** The charger **52** includes circuitry for maintaining either a constant current or a constant voltage while charging of the battery, for measuring the amount of charge on the battery, and for providing protection from faults. The step-down converter **56** can either be a part of a device powered by the battery or it can be placed outside such a device. A battery switch **S4** selectively connects and disconnects the battery **BAT** from the load **8.** A second controller **64** synchronizes operation of the step-down converter **56** and the charger **52.**

When the ac-dc converter **10** connects to an AC source **4,** the battery **BAT** is not needed for supplying power to the load **8.** Accordingly, the second controller **64** opens the battery switch **S4.** Meanwhile, the step-down converter **56** lowers the second voltage *V2* to a value a little above the charging voltage of the battery **BAT,** thereby allowing the CC/CV charger **52** to charge the battery efficiently, assuming the battery is not already fully charged. The step-down converter **56** also provides the necessary system voltage *VSYS* to the load **8.**

However, once the ac-dc converter **10** is disconnected, the step-down converter **56** can no longer supply power. The second controller **64** therefore closes the battery switch **S4** so that the battery **BAT** can supply the necessary system voltage *VSYS.*

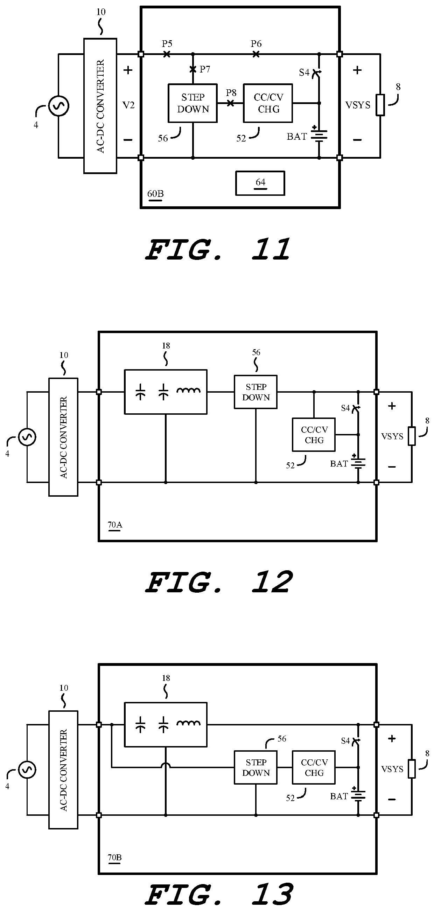

FIG. 11 illustrate a second battery manager **60B,** where the charging voltage and system voltage *VSYS* are separated, unlike in the first battery manager **60A.** The battery switch **S4** is only closed when the battery is used as a source of power for the system voltage *VSYS.* The advantage of this second battery manager **60B** over the first battery manager **60A** is that the step-down converter **56** does not have to supply power to charge the battery **BAT** and the system voltage *VSYS* when the ac-dc converter **10** is connected.

In some embodiments, the ac-dc converter **10** includes an adiabatically charged switched-capacitor converter of the type illustrated in FIGS. 2-4 and variants thereof.

FIGS. 10 and 11 collectively show first through eighth locations **P1, P2...P8** in which an adiabatic switched-capacitor circuit **18** of the type shown in FIG. 3 can be placed within the first and second battery managers **60A, 60B.** More than one adiabatic switched-capacitor circuit **18** can actually be used, however, the largest performance improvement will likely be seen by only incorporating a single adiabatic switched-capacitor circuit **18.**

FIG. 12 shows a third battery manager **70A** in which the adiabatic switched-capacitor circuit **18** is placed at the first location **P1.** Incorporating an adiabatic switched-capacitor circuit **18** into the third battery manager **70A** reduces the burden on the step-down converter **56.** For example, in the third battery manager **70A,** shown in FIG. 12, the voltage stress is about half of what it would have been had the adiabatic switched-capacitor circuit **18** been omitted. This has the effect of drastically reducing the power loss in the step-down converter **56** for a given output power.

FIG. 13 shows a fourth battery manager **70B** in which the adiabatic switched-capacitor circuit **18** is instead placed at the sixth location **P6.** Placement of the adiabatic switched-capacitor circuit **18** provides a way to target the part of the circuit in which improvement is sought. For example, in the fourth battery manager **70B,** shown in FIG. 13, the main improvement is not in the step-down converter **56,** but in the downstream point-of-load (POL) converters in a load **8.**

The configurations shown in FIGS. 12 and 13 are particularly useful because they are most compatible with existing integrated circuits that implement battery managers.

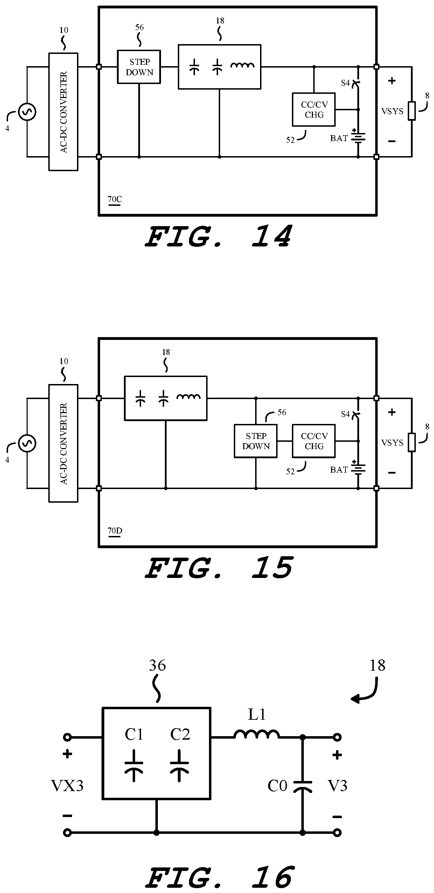

FIG. 14 shows a fifth battery manager **70C** in which the adiabatic switched-capacitor circuit **18** has been placed in the second position **P2.** FIG. 15 shows a sixth battery manager **70D** in which the adiabatic switched-capacitor circuit **18** has been placed in the fifth position **P5.**

FIG. 16 shows a block diagram of a typical adiabatic switched-capacitor circuit **18.** The circuit is a 2X voltage divider that provides a 2:1 voltage conversion from an input voltage *VX3* to an output voltage V3. This adiabatic switched-capacitor circuit **18** is designed to accept a maximum input voltage of 24 volts.

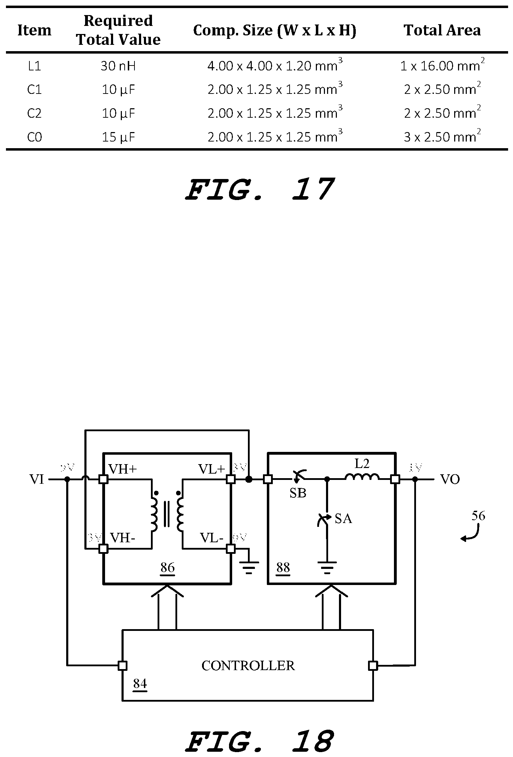

FIG. 17 shows an example component list for the architecture in FIG. 16.

A typical step-down converter **56** as shown in FIGS. 10-11 generally includes a switching regulator. Accordingly, some embodiments incorporate a switched-capacitor converter **86** in the step-down converter **56** together with a third controller **84** that controls both the switched-capacitor converter **86** and the built-in switching regulator **88.** The third controller **84** can thus operate the switched-capacitor converter **86,** as shown in FIG. 18, in such a way that the switching regulator **88** adiabatically charges and discharges the capacitors within the switched-capacitor converter **86.** This provides a way to achieve adiabatic charge and discharge without the need to provide an extra LC filter with the switched-capacitor converter **86.** Additionally, the switched-capacitor converter **86** in this case is inherently modular and can readily be supplied as a separate component to be incorporated in an existing step-down converter **56.**

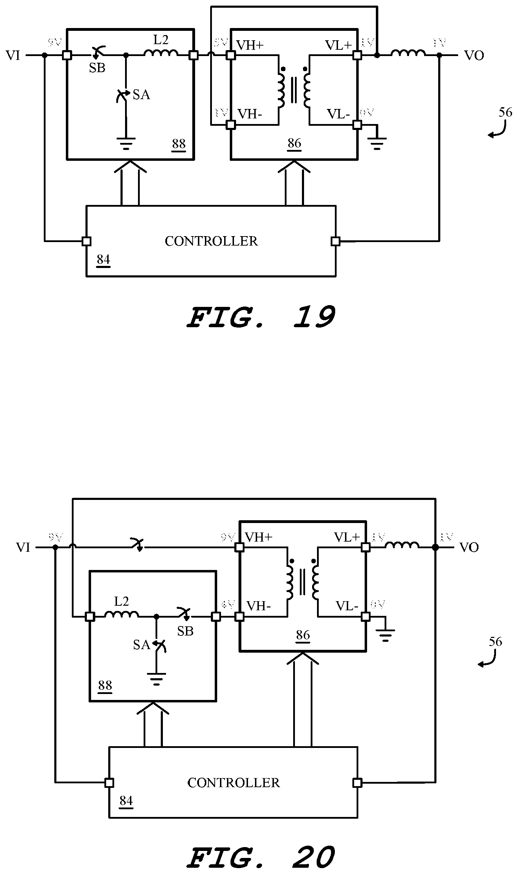

FIGS. 19-20 illustrate two additional architectures that implement the same concept. The embodiment shown in FIG. 19 is the reverse of the embodiment in FIG. 18. While the embodiment shown in FIG. 20, provides an efficient way to convert power by placing the switching regulator **88** in series with the input of the switched-capacitor converter **86** and in parallel with the output of the switched-capacitor converter **86.** Therefore, the switching regulator **88** only carries a fraction of the current delivered to the output while still retaining the ability to directly control the current delivered to the output.

The third controller **84** in the embodiments of FIGS. 18-20 provides control signals to turn the switches within the switching regulator **88** and the switched-capacitor converter **86** on and off in response to a sensed output voltage *VO* and/or input voltage *VI*. Based on these inputs, the controller **84** makes necessary adjustments to the control signals provided to switching regulator **88** and to the switched-capacitor converter **86** such that the such that the output voltage *VO* is regulated within some tolerance.

In the illustrated embodiments, the switching regulator **88** is a Buck converter that includes a first switch **SA,** a second switch **SB,** and an inductor **L2.** When the first switch **SA** is closed, the second switch **SB** is open, and vice versa. The first and second switches **SA, SB** operate at a specific frequency. This frequency controls an average dc current through the inductor **L2.** This makes it possible to control the voltage at the output terminal of the inductor **L2** (i.e., the terminal not connected to the switches) by varying the duty cycle of the first switch **SA.** In particular, the longer the first switch **SA** is closed during a cycle the lower the voltage at the output terminal of the inductor **L2** will be.

FIG. 21 illustrates a detailed circuit diagram of one implementation in which the switched-capacitor converter **86** is a full-wave cascade multiplier. The switched-capacitor converter **86** includes a first set **1** of switches, a second set **2** of switches, and capacitors **C1A-C3B.** Closing switches in the first switch set **1** and opening switches in the second switch set **2** arranges the capacitors **C1A-C3B** are arranged in a first state. Conversely, closing the switches in the second set **2** and opening the switches in the first set **1** arranges the capacitors **C1A-C3B** in a second state. During normal operation, the switched-capacitor converter **86** cycles between the first state and the second state at a specific frequency, thereby transferring charge between the capacitors **C1A-C3B** and terminals. The switched-capacitor converter **86** can be modeled as a dc transformer as in FIGS. 18-20. In this implementation, the voltage conversion ratio (*VH* to *VL*) is three to one.

In some implementations, a computer-accessible storage-medium includes a database representative of one or more components of the converter. For example, the database may include data representative of a switching network that has been optimized to promote low-loss operation of a charge pump.

Generally speaking, a computer-accessible storage-medium may include any non-transitory storage media accessible by a computer during use to provide instructions and/or data to the computer. For example, a computer accessible storage medium may include storage media such as magnetic or optical disks and semiconductor memories.

Generally, a database representative of the system may be a database or other data structure that can be read by a program and used, directly or indirectly, to fabricate the hardware comprising the system. For example, the database may be a behavioral-level description or register-transfer level (RTL) description of the hardware functionality in a high level design language (HDL) such as Verilog or VHDL. The description may be read by a synthesis tool that may synthesize the description to produce a netlist comprising a list of gates from a synthesis library. The netlist comprises a set of gates that also represent the functionality of the hardware comprising the system. The netlist may then be placed and routed to produce a data set describing geometric shapes to be applied to masks. The masks may then be used in various semiconductor fabrication steps to produce a semiconductor circuit or circuits corresponding to the system. In other examples, Alternatively, the database may itself be the netlist (with or without the synthesis library) or the data set.

In various aspects and embodiments the invention is directed to:
**A first embodiment is** an apparatus for switching between powering a load using energy stored in a battery and powering said load using energy from an AC source, said apparatus comprising a battery manager, a switched-capacitor network, a battery charger for charging said battery while said load is being powered using energy from said AC source, and a first controller, wherein said battery manager comprises an input terminal for coupling to a bridge rectifier, wherein said switched-capacitor network comprises a plurality of capacitors and first and second switch sets, wherein closing switches in said first switch set and opening switches in said second switch set arranges said capacitors into a first state, wherein closing said switches in said second set and opening said switches in said first set arranges said capacitors in a second state, and wherein, in operation, said controller causes said switched-capacitor network to transition between said first state and the second state at a specific frequency, thereby transferring charge between capacitors and terminals of said switched-capacitor network.
**2.** The apparatus of embodiment **1,** wherein said switched-capacitor network is an adiabatic switched-capacitor network.
**3.** The apparatus of embodiment **1,** further comprising an AC/DC converter, wherein said AC/DC converter comprises said first controller, a charge pump, and a switching regulator connected to said charge pump, wherein said first controller controls said switching regulator and said charge pump, and wherein said bridge rectifier is coupled to an input of said switching regulator.
**4.** The apparatus of embodiment **1,** wherein said battery manager comprises said switched-capacitor network.
**5.** The apparatus of embodiment **1,** further comprising an AC/DC converter, wherein said battery manager comprises an input and a step-down converter, wherein said input is connected to said AC/DC converter, and wherein said switched-capacitor network is between said step-down converter and said input.
**6.** The apparatus of embodiment **1,** wherein said battery manager comprises an input, an output, a first line, a second line, a third line, a step-down converter, and a switch, wherein said output is configured to be connected to a load that is to be driven, wherein said input is connected to an AC/DC converter, wherein said switch selectively connects and disconnects said battery from said first line, wherein said first line connects said input to said output, wherein said second line connects said step-down converter to said first line at a first node, wherein said third line connects said switch to said first line at a second node, and wherein said switched-capacitor network is on said first line between said first and second nodes.
**7.** The apparatus of embodiment **1,** wherein said battery manager comprises a first line, a second line, an output to which a load to be driven is to be connected, said battery charger, and a step-down converter, wherein said first line extends between said step-down converter and said output, wherein said second line connects said battery charger to said first line at a first node, and wherein said switched-capacitor network is disposed between said first node and said step-down converter.
**8.** The apparatus of embodiment **1,** wherein said battery manager comprises an input, an output, a step-down converter, a first line, and a second line, wherein said first line extends from said input to said output, wherein said second line connects said step-down converter to said first line at a node, and wherein said switched-capacitor network is disposed between said input and said node.
**9.** The apparatus of embodiment **1,** wherein said battery manager comprises a step-down converter, wherein said step-down converter comprises an inductance, and wherein said switched-capacitor network relies on said inductance of said step-down converter to limit a rate of change of charge present on a capacitor within said switched-capacitor network.
**10.** The apparatus of embodiment **1,** further comprising an AC/DC converter, wherein said AC/DC converter comprises said first controller, a charge pump, and a switching regulator connected to said charge pump, wherein said first controller controls said switching regulator and said charge pump.
**11.** The apparatus of any of the preceding embodiments, wherein said switched-capacitor network comprises a charge pump and an inductance coupled to said charge pump.
**12.** The apparatus of embodiment **1,** wherein said switched-capacitor network comprises a cascade multiplier.
**13.** The apparatus of embodiment **1,** further comprising rate-control circuitry, wherein said switched-capacitor network comprises a first capacitor, that, during operation of said switched-capacitor network, has an amount of charge stored thereon, and wherein said rate-control circuitry is configured to constrain a rate at which said amount of charge is changed to at least in part as a result of causing charge to pass through an inductance.
**14.** The apparatus of embodiment **1,** further comprising said bridge rectifier.
**15.** The apparatus of embodiment **1,** further comprising an AC/DC converter, wherein said bridge rectifier is a constituent of said AC/DC converter.
**16.** The apparatus of embodiment **1,** further comprising an AC/DC converter, wherein said switched-capacitor network is a constituent of said AC/DC converter.
**17.** The apparatus of embodiment **1,** wherein said AC source passes energy to said battery manager wirelessly.
**18.** The apparatus of embodiment **1,** wherein said battery charger switches between maintaining a constant current while charge is being provided to said battery and maintaining a constant voltage while charge is being provided to said battery.
**19.** The apparatus of embodiment **1,** further comprising a second controller, said second controller being configured to control said battery charger.
**20.** The apparatus of embodiment **1,** wherein said switched-capacitor network is a diabatic switched-capacitor network.
**21.** The apparatus of embodiment **1,** wherein said battery manager comprises said switched-capacitor network, and wherein said switched-capacitor network is an adiabatic switched-capacitor network.
**22.** The apparatus of embodiment **1,** further comprising at travel charger, wherein said battery manager is a constituent of said travel charger.
**23.** The apparatus of embodiment **1,** wherein said battery-charger is a CCCV charger.
**24.** The apparatus of asepct **1,** wherein said battery-charger is configured to measure charge in said battery.
**25.** The apparatus of embodiment **1,** wherein said battery-charger is configured to protect said battery from faults.
**26.** The apparatus of embodiment **1,** wherein said controller comprises an isolation barrier between a primary and secondary section thereof.
**27.** The apparatus of embodiment **10,** wherein said regulator is a magnetically-isolated regulator.
**28.** The apparatus of embodiment **27,** wherein said magnetically-isolated regulator comprises a fly-back converter.
**29.** The apparatus of embodiment **28,** wherein said fly-back converter comprises a quasi-resonant fly-back converter.
**30.** The apparatus of embodiment **28,** wherein said fly-back converter comprises an interleaved fly-back converter
**31.** The apparatus of embodiment **28,** wherein said fly-back converter comprises a two-switch fly-back converter.
**32.** The apparatus of embodiment **28,** wherein said fly-back converter comprises an active-clamp fly-back converter
**33.** The apparatus of embodiment **27,** wherein said magnetically-isolated regulator comprises a forward converter.
**34.** The apparatus of embodiment **33,** wherein said forward converter comprises a multi-resonant forward converter.
**35.** The apparatus of embodiment **33,** wherein said forward converter comprises an active-clamp forward converter.
**36.** The apparatus of embodiment **33,** wherein said forward converter comprises a two-switch forward converter.
**37.** The apparatus of embodiment **27,** wherein said magnetically-isolated regulator comprises a half-bridge converter.
**38.** The apparatus of embodiment **37,** wherein said half-bridge converter comprises an asymmetric half-bridge converter.
**39.** The apparatus of embodiment **37,** wherein said half-bridge converter comprises a multi-resonant half-bridge converter.
**40.** The apparatus of embodiment **37,** wherein said half-bridge converter comprises an LLC resonant half-bridge converter.
**41.** The apparatus of embodiment **27,** wherein said magnetically-isolated regulator comprises a full-bridge converter.
**42.** The apparatus of embodiment **10,** wherein said regulator comprises a non-isolated regulator.
**43.** The apparatus of embodiment **42,** wherein said non-isolated regulator comprises a boost converter.
**44.** The apparatus of embodiment **42,** wherein said non-isolated regulator comprises a buck-boost converter.
**45.** The apparatus of embodiment **42,** wherein said non-isolated regulator comprises a buck converter.
**46.** The apparatus of embodiment **10,** wherein said regulator comprises a galvanically-isolated regulator.
**47.** The apparatus of embodiment **10,** wherein said regulator comprises a first functional component and a second functional component, wherein said first and second functional components communicate energy therebetween in the absence of electrical conduction therebetween.
**48.** The apparatus of embodiment **47,** further comprising an intermediary that enables communication of energy between said first and second functional components in the absence of electrical conduction therebetween.
**49.** The apparatus of embodiment **48,** wherein said energy is stored in a magnetic field.
**50.** The apparatus of embodiment **1,** wherein said switched-capacitor network is one that, during operation thereof, causes at least one capacitor therein to experience a change in charged stored therein by causing charge to be passed through a non-capacitive element.
**51.** The apparatus of embodiment **1,** wherein said switched-capacitor network comprises a multi-phase network.
**52.** The apparatus of embodiment **1,** wherein said switched-capacitor network comprises a cascade multiplier.
**53.** The apparatus of embodiment **52,** wherein said cascade multiplier is an adiabatic cascade multiplier.
**54.** The apparatus of embodiment **52,** wherein said cascade multiplier is a diabatic cascade multiplier.
**55.** The apparatus of embodiment **1,** wherein said switched-capacitor network comprises a ladder network.
**56.** The apparatus of embodiment **1,** wherein said switched-capacitor network comprises a Dickson network.
**57.** The apparatus of embodiment **1,** wherein said switched-capacitor network comprises a series-parallel network.
**58.** The apparatus of embodiment **1,** wherein said switched-capacitor network comprises a Fibonacci network.
**59.** The apparatus of embodiment **1,** wherein said switched-capacitor network comprises a doubler network.
**60.** The apparatus of embodiment **1,** further comprising a travel adapter, wherein said AC to DC converter is a constituent of said travel adapter, wherein said travel adapter comprises a USB port, and wherein said travel adapter receives an AC voltage and outputs a DC voltage at said USB port.
**61.** The apparatus of embodiment **1,** wherein said bridge rectifier comprises bridge diodes and a bridge capacitor, wherein said bridge diodes are arranged to form said bridge, and wherein, during operation of said bridge rectifier, an output of said bridge is present across said bridge capacitor.
**62.** The apparatus of embodiment **1,** further comprising active power-factor circuitry.
**63.** The apparatus of embodiment **1,** further comprising a fuse disposed to prevent excess current within said AC to DC converter.
**64.** The apparatus of embodiment **1,** further comprising an electromagnetic interference filter disposed to suppress radiation generated during operation of said AC to DC converter.
**65.** Furthermore, the invention can be directed to a computer-readable medium having encoded thereon information that represents an apparatus as recited in any one of embodiments **1** to **64.**
**66.** The apparatus of embodiment **1,** wherein said battery manager comprises said battery charger and a step-down converter, wherein said step-down converter is disposed such that, in operation, energy for charging said battery and energy for powering said load both pass through said step-down converter.
**67.** The apparatus of embodiment **1,** wherein said battery manager comprises said battery charger and a step-down converter, wherein said step-down converter is disposed such that, in operation, energy for charging said battery passes through said step-down converter and energy for powering said load bypasses said step-down converter.
**68.** The apparatus of embodiment **1,** further comprising a bypass switch control circuit to control slew rate of voltage transitions in said switched-capacitor circuit.

## Claims

1. An apparatus comprising:
a switching regulator to be electrically coupled to an AC-DC converter;
a charge pump electrically coupled to the switching regulator;
a charger to receive a voltage from at least one of: the switching regulator, the charge pump, or a combination of the switching regulator and the charge pump; and
at least one controller to control the switching regulator, the charge pump, and the charger to provide the voltage, wherein the voltage comprises at least one of: a system voltage for powering a load, a charging voltage to charge a battery, or a combination of the system voltage for powering the load and the charging voltage to charge the battery.

2. The apparatus of claim 1, wherein the charge pump is positioned between a voltage source and the switching regulator.

3. The apparatus of claim 1, further comprising a first line coupling the switching regulator to an output and a second line coupling the charger to a node on the first line, wherein the charge pump is positioned between the switching regulator and the node.

4. The apparatus of claim 1, further comprising a first line coupling the switching regulator to an output and a second line coupling the charger to a node on the first line, wherein the charge pump is positioned between the charger and the node.

5. The apparatus of claim 1, further comprising a first line coupling the switching regulator to an output, wherein the charge pump is positioned between a first node on the first line and a second node on the first line.

6. The apparatus of claim 1, wherein:
the at least one controller controls the switching regulator and the charge pump such that energy passes through at least one of: the switching regulator, the charge pump, or a combination of the switching regulator and the charge pump to charge the battery; and
the energy passes through the charger.

7. The apparatus of claim 1, wherein the at least one controller comprises a plurality of controllers.

8. The apparatus of claim 7, wherein the plurality of controllers comprise a first controller to control the switching regulator.

9. The apparatus of claim 7, wherein the plurality of controllers comprise a second controller to control the charge pump.

10. The apparatus of claim 7, wherein the plurality of controllers comprise a third controller to control the charger.

11. The apparatus of claim 1, wherein the charge pump comprises a first charge pump and a second charge pump.

12. The apparatus of claim 11, wherein the charge pump further comprises a plurality of bypass switches controlled by the at least one controller to selectively bypass at least one of: the first charge pump, the second charge pump, or a combination of the first charge pump and the second charge pump.

13. The apparatus of claim 1, wherein the charge pump charges the battery.

14. The apparatus of claim 1, wherein the charger charges the battery.

15. The apparatus of claim 1, wherein the charger is a buck-boost battery charger.

16. The apparatus of claim 1, wherein a source of the voltage provided is a part of a wireless charging system.

17. The apparatus of claim 1, wherein a source of the voltage is provided through a USB port.

18. The apparatus of claim 1, wherein the charger comprises a circuitry to maintain a constant current or a constant voltage while charging the battery.

19. The apparatus of claim 1, wherein the charger comprises a circuitry to measure an amount of charge on the battery.

20. The apparatus of claim 1, wherein the charger comprises a circuitry to provide protection from a fault.

21. The apparatus of claim 1, further comprising at least one switch to selectively connect and disconnect the battery from the load.

22. The apparatus of claim 1, wherein the charge pump comprises a plurality of switches forming a switched capacitor network, the switched capacitor network comprising at least one switching configuration.

23. A method comprising:
receiving, by a charger, a voltage from at least one of: a switching regulator, a charge pump electrically coupled to the switching regulator, or a combination of the switching regulator and the charge pump, wherein the switching regulator is to be electrically coupled to an AC-DC converter; and
controlling the switching regulator, the charge pump, and the charger to provide the voltage, wherein the voltage comprises at least one of: a system voltage for powering a load, a charging voltage to charge a battery, or a combination of the system voltage for powering the load and the charging voltage to charge the battery.

24. The method of claim 23, wherein the charge pump is positioned between a voltage source and the switching regulator.

25. The method of claim 23, further comprising a first line coupling the switching regulator to an output and a second line coupling the charger to a node on the first line, wherein the charge pump is positioned between the switching regulator and the node.

26. The method of claim 25, further comprising a first line coupling the switching regulator to an output and a second line coupling the charger to a node on the first line, wherein the charge pump is positioned between the charger and the node.

27. The method of claim 23, further comprising a first line coupling the switching regulator to an output, wherein the charge pump is positioned between a first node on the first line and a second node on the first line.

28. The method of claim 23, further comprising:
controlling the switching regulator and the charge pump such that energy passes through at least one of: the switching regulator, the charge pump, or a combination of the switching regulator and the charge pump to charge the battery, wherein the energy passes through the charger.

29. The method of claim 23, wherein the charge pump comprises a first charge pump and a second charge pump.

30. The method of claim 29, wherein the charge pump further comprises a plurality of bypass switches controlled by the at least one controller to selectively bypass at least one of: the first charge pump, the second charge pump, or a combination of the first charge pump and the second charge pump.

31. The method of claim 23, wherein the charge pump charges the battery.

32. The method of claim 23, wherein the charge pump comprises a plurality of switches forming a switched capacitor network, the switched capacitor network comprising at least one switching configuration.

33. An integrated circuit comprising:
a plurality of switches forming a switched capacitor network, the switched capacitor network comprising at least one switching configuration; and
a controller to generate control signals to control the plurality of switches according to a switching frequency, wherein the switched capacitor network provides a voltage to at least one of: a charger, a switching regulator, a load , or a combination of the charger, the switching regulator, and the load, wherein the voltage comprises at least one of: a system voltage for powering the load, a charging voltage to charge a battery, or a combination of the system voltage for powering the load and the charging voltage to charge the battery.

34. The integrated circuit of claim 33, wherein the load comprises a system voltage node.

35. The integrated circuit of claim 33, wherein the plurality of switches form at least one phase to operate in at least one operation mode to convert the voltage.

36. The integrated circuit of claim 35, wherein the at least one phase comprises a first charge pump, a second charge pump, and a plurality of bypass switches controlled by the controller to selectively bypass at least one of: the first charge pump, the second charge pump, or a combination of the first charge pump and the second charge pump.

37. The integrated circuit of claim 33, wherein at least some switches of the plurality of switches are coupled to a negative terminal of the switched capacitor network to facilitate transition of the switched capacitor network between a first state and a second state at a specific frequency.

38. The integrated circuit of claim 37, wherein the first state is a charging state and the second state is a discharging state.

39. The integrated circuit of claim 33, wherein at least some switches of the plurality of switches form phase switches coupled to a negative terminal of at least one fly capacitor.

40. An integrated circuit comprising:
a plurality of switches contained in a switching regulator, the switching regulator to be electrically coupled to an AC-DC converter; and
a controller to generate control signals to control the plurality of switches to provide a voltage to at least a charger, a charge pump, or a combination of the charger and the charge pump, wherein the voltage comprises at least one of: a system voltage for powering a load, a charging voltage to charge a battery, or a combination of the system voltage for powering the load and the charging voltage to charge the battery.

41. The integrated circuit of claim 40, wherein the plurality of switches transform the voltage when used with an inductor external to the integrated circuit.

42. An integrated circuit comprising:
a charger; and
a controller to control the charger to receive a voltage from at least one of: a switching regulator, a charge pump, or a combination of the switching regulator and the charge pump, wherein the switching regulator is to be electrically coupled to an AC-DC converter, and wherein the voltage comprises at least one of: a system voltage for powering a load, a charging voltage to charge a battery, or a combination of the system voltage for powering the load and the charging voltage to charge the battery.

43. The integrated circuit of claim 42, wherein the controller is to maintain a constant current, a constant voltage, or a constant current and a constant voltage to charge the battery.

44. The integrated circuit of claim 42, further comprising at least one switch to selectively connect or disconnect the battery to the load.

45. The integrated circuit of claim 42, further comprising a second controller to synchronize an operation of the switching regulator and the charger.

46. The integrated circuit of claim 45, wherein the second controller selectively connects or disconnects at least one switch to selectively connect or disconnect the battery to the load.

47. The integrated circuit of claim 46, wherein the second controller connects the at least one switch to connect the battery to the load when the voltage received by the charger is zero.
